# EUROPÄISCHE PATENTSCHRIFT

(11) **EP 2 605 375 B1**
(45) Veröffentlichungstag und Bekanntmachung des Hinweises auf die Patenterteilung: **19.06.2019**
(21) Anmeldenummer: 12196987.7
(22) Anmeldetag: 13.12.2012
(51) Int. Cl.: H02K 3/32, H02K 15/12, H02K 3/38

(54) **Stator für einen Elektromotor sowie Verfahren zur Herstellung eines Stators für einen Elektromotor**
Stator for an electric motor and method for manufacturing a stator for an electric motor
Stator pour un moteur électrique et procédé de fabrication d'un stator pour un moteur électrique

(30) Priorität: 14.12.2011 DE 102011088518
(43) Veröffentlichungstag der Anmeldung: 19.06.2013
(73) Patentinhaber: Metabowerke GmbH, 72622 Nürtingen (DE)
(72) Erfinder: Schmohl, Michael, 72119 Ammerbuch (DE); Flöte, Enrico, 72636 Frickenhausen-Linsenhofen (DE); Ebner, Felix, 73033 Göppingen (DE)
(74) Vertreter: Lorenz, Markus

(56) Entgegenhaltungen:
- EP-A2- 0 509 366
- DE-B- 1 113 017
- US-A- 3 904 785
- US-A- 4 387 311
- US-A1- 2002 108 566
- US-A1- 2005 073 204

## Beschreibung

Die vorliegende Erfindung betrifft einen Stator für einen Elektromotor sowie ein Verfahren zur Herstellung eines Stators für einen Elektromotor.

Derartige Statoren werden in elektrischen Antrieben bzw. Elektromotoren eingesetzt, die neben einem Stator auch einen Rotor umfassen. Eine übliche Anwendung solcher elektrischer Antriebe findet sich bei Haushaltsgeräten und Elektrowerkzeugmaschinen.

Ein Stator eines elektrischen Antriebs bzw. eines Elektromotors mit einem entsprechenden Rotor weist in der Regel einen Statorkörper mit einer geschlossenen Statorwand und daran angeordneten Polhörnern bzw. Polspitzen auf. Innerhalb dieser Polhörner ist der Rotor des elektrischen Antriebs angeordnet, welcher sich um eine Drehachse innerhalb des Stators relativ zu diesem rotatorisch bewegt. Der Statorkörper, welcher üblicherweise aus eisenhaltigen Werkstoff (Eisen) hergestellt ist, weist einen Spulenraum auf, der eine Anzahl von Spulennuten umfasst, die von den jeweiligen Polhörnern und der Statorwand des Stators begrenzt werden. In diese Spulennuten wird üblicherweise ein isolierter Spulendraht bzw. werden aus einem derartigen Draht gefertigte Feldspulen eingelegt.

Elektrische Antriebe mit einem Stator sowie einem darin angeordneten Rotor sind in der Regel luftgekühlt, wobei Umgebungsluft in den elektrischen Antrieb eingesaugt und durch diesen hindurch gezogen wird. Die durch den elektrischen Antrieb hindurchströmende Luft führt die Wärme von dem Spulendraht ab und stellt dabei sicher, dass der elektrische Antrieb ausreichend Leistung abgeben kann, ohne zu überhitzen.

Als Nachteil in Zusammenhang mit der Luftkühlung elektrischer Antriebe hat sich in der Praxis gezeigt, dass in der Kühlungsluft oftmals Staubpartikel enthalten sind, die an dem Spulendraht angreifen und dadurch zu einer Abrasion des Spulendrahts führen können.

Um diesem Problem zu begegnen, ist es aus der Praxis bekannt, handeingelegte, vorgewickelte Spulen vor dem Einlegen in den Spulenraum mit einer Bandage und/oder Isolierpapier zu umwickeln. Dabei ist jedoch dieser zusätzliche Arbeitsschritt des Umwickelns der vorgewickelten Spule äußerst aufwendig und somit sowohl zeit- also auch kostenintensiv bei der Herstellung. Weitere Nachteile von handeingelegten, vorgewickelten Spulen ergeben sich aus dem ebenfalls kosten- und zeitintensiven Schritt des Handeinlegens der Spule in den Spulenraum und aus dem Umstand, dass der Spulenraum bei handeingelegten Spulen niemals vollständig ausgenutzt werden kann, da stets ein geringer Spalt zwischen der Spulennut und der eingelegten vorgewickelten Spule verbleibt.

Alternativ wird der Spulenraum eines Statorkörpers direkt mit Spulendraht bewickelt, vorzugsweise mit Hilfe einer Nadelwickelmaschine oder dergleichen, da hierdurch eine höhere Packungsdichte des Spulendrahts in dem Spulenraum erreicht wird und weiterhin eine Schnellbewicklung erfolgen kann. Ferner kann nach dem Stand der Technik der an den Stirnseiten des Statorkörpers einen Wickelkopf bildende Spulendraht mittels einer Bandage umwickelt werden.

Als weitere Maßnahme ist es nach dem Stand der Technik üblich, den Statorkörper, soweit er nicht von dem Spulendraht bedeckt ist, mit einem Isolationslack bzw. einem Schutzlack zu versehen, um im Falle von leitfähigen Ablagerungen mögliche Kriechstrecken zur Vermeidung eines Kurzschlusses zu vergrößern. Es werden also nach dem Stand der Technik der von außen zugängliche Teil des Spulendrahts und der nicht bewickelte Teil des Stators mit unterschiedlichen Beschichtungen versehen, was zu einer vergleichsweise aufwändigen Herstellung des Stators führt.

Aus dem Stand der Technik ist ferner ein Elektromotor bekannt, dessen Komponenten Statoranordnung und Rotorwellenanordnung innerhalb eines Motorgehäuses, das die Statoranordnung umgibt, und Lagerschilden, die endseitig an dem Motorgehäuse angebracht sind, dichtend aufgenommen sind. Die Statoranordnung kann gemäß einer Ausführungsform mit einem wärmeübertragenden festen Harz überzogen sein, das die Wickelköpfe der Statoranordnung und Teile des Statorkörpers umgibt, indem es im Zwischenraum zwischen dem Außenumfang des Statorkörpers und dem Innenumfang des diesen umgebenden Motorgehäuses vorgesehen ist. Ein derartiger Stator st aus der US 2005/073204 A1 bekannt.

Die Erfindung stellt sich damit die Aufgabe, einen verbesserten Schutz des Spulendrahts zum Schutz vor Abrasion und vor Kurzschlüssen bereitzustellen. Diese Aufgabe wird gelöst durch den Stator mit den Merkmalen des Anspruchs 1 sowie durch ein Verfahren mit den Merkmalen des Anspruchs 12. Die Unteransprüche betreffen vorteilhafte Ausführungsformen und Weiterbildungen der Erfindung.

Der erfindungsgemäße Stator eines elektrischen Antriebs umfasst einen Statorkörper mit einer Außenseite und einer Innenseite mit einem Spulenraum zur Aufnahme eines Spulendrahts in Form einer Spule. Dabei umfasst der Spulenraum mehrere Nuten, die von der Statorwand und Polhörnern des Stators begrenzt werden. Ferner umfasst der Stator den in den Spulenraum eingelegten Spulendraht sowie Wickelköpfe, welche aus dem Spulendraht gebildet sind. Erfindungsgemäß ist die Außenseite des Statorkörpers und mindestens ein Wickelkopf mindestens teilweise mit einer gemeinsamen Beschichtung versehen.

Im Unterschied zum Stand der Technik werden also nicht unterschiedliche Beschichtungen für die Wickelköpfe und den Statorkörper verwendet, sondern Wickelkopf und Stator werden gemeinsam beschichtet. Damit wird es prinzipiell möglich, diese Beschichtung in einem Arbeitsgang aufzubringen. Ferner ergibt sich der Vorteil, dass Grenzflächen zwischen den unterschiedlichen Beschichtungsarten vermieden werden, so dass Angriffsflächen für das Ablagern von Schmutzteilchen oder leitfähigem Metallabrieb wirksam reduziert werden.

Dadurch, dass der Spulendraht erfindungsgemäß im Bereich mindestens eines Drahtendes von einer Ummantelung umgeben ist, die sich bis in den Bereich der Spulennut erstreckt, kann ein effizienter mechanischer Schutz des Anschlussbereichs der Spule und insbesondere ein optimaler Schutz des Drahtendes erreicht werden. Unter einem Drahtende wird derjenige Bereich des Spulendrahts verstanden, welcher, ohne zur eigentlichen Wicklung zu gehören, zur Spule hin bzw. von der Spule weg führt.

Dadurch, dass die Beschichtung als durchgängige, geschlossene Schicht ausgebildet ist, welche sowohl die Wickelköpfe als auch den Stator vollständig einhüllt, kann ein besonders effektiver Schutz der Anordnung aus Stator und Spule erreicht werden.

Die Beschichtung kann im Bereich der Statoraußenseite eine Dicke im Bereich von 0,001 bis 0,4mm, insbesondere von 0,05 bis 0,15 mm aufweisen, wohingegen sie im Bereich der Wickelköpfe eine Dicke im Bereich von 0,01 bis zu 3mm, insbesondere im Bereich von 0,15 bis 0,25 mm aufweisen kann.

Als vorteilhafte Materialien für die Beschichtung kommen praktisch alle handelsüblichen Tränkharze bzw. Träufelharze in Frage.

Die Ummantelung kann insbesondere als Schrumpfschlauch oder auch als Gewebeschlauch ausgebildet sein. Der Bereich zwischen der Ummantelung und dem Spulendraht kann mindestens teilweise mit dem Material der Beschichtung ausgefüllt sein. Selbstverständlich ist es auch denkbar, dass der genannte Bereich vollständig mit dem Material der Beschichtung ausgefüllt ist. Aufgrund der kleinen Spalte zwischen Ummantelung und Spulendraht sowohl im Inneren der Ummantelung als auch in der äußeren Umgebung der Ummantelung, soweit sie sich bis in die Spulenwicklungen hinein erstreckt, wird die Beschichtung beim Aufbringen, wo sie in der Regel noch flüssig ist, durch die Kapillarwirkung der erwähnten schmalen Spalte in diese hineingezogen und füllt diese dann praktisch vollständig aus, so dass sich keine Hohlräume ergeben, in welchen sich gegebenenfalls schädlicher Staub ansammeln könnte.

Dadurch, dass sich das Material der Beschichtung auch im Inneren der Spule zwischen den Spulenwindungen befindet, kann insbesondere im Fall der Verwendung von Träufelharz als Beschichtungsmaterial eine zusätzliche vorteilhafte Wirkung dahingehend erreicht werden, dass das Beschichtungsmaterial neben dem Abrasionsschutz auch der zusätzlichen mechanischen Stabilisierung der Spule dient.

Das erfindungsgemäße Verfahren zum Herstellen eines oben beschriebenen Stators besteht im Wesentlichen darin, dass zunächst der Spulendraht in den Spulenraum eingebracht wird, was insbesondere durch ein direktes Bewickeln des Stators erfolgen kann. Im Anschluss daran wird der Spulendraht im Bereit mindestens eines Drahtendes mit einer Ummantelung umgeben, wobei diese bis in den Bereich der Nut geführt wird. Nachfolgend werden der mit dem Spulendraht versehene Statorkörper und mindestens ein Wickelkopf gemeinsam beschichtet. Dies kann insbesondere durch Eintauchen des Statorkörpers in das Beschichtungsmaterial erreicht werden, wobei es ebenso denkbar ist, den Statorkörper den bzw. die Wickelköpfe mit dem Beschichtungsmaterial zu besprühen.

Dadurch, dass sowohl die Wickelköpfe als auch der Statorkörper gemeinsam beschichtet werden, lassen sich die nach dem Stand der Technik erforderlichen Arbeitsschritte des separaten Beschichtens der Wickelköpfe und des Statorkörpers zu einem zusammenfassen, was die Herstellung eines mit dem erfindungsgemäßen Stator ausgestatteten Rotors erheblich vereinfacht und damit verbilligt.

Ferner wird es durch die vorteilhafte Beschichtung einfacher möglich, Bauformen zur realisieren, bei welchen der Spulendraht über die Nut hinaus gewickelt ist. Da durch die erfindungsgemäße Beschichtung ein verbesserter Abrasionsschutz erreicht wird, können auch über die Nut überstehende Teile der Spulenwicklung von diesem verbesserten Schutz profitieren.

Bei gleichem beanspruchtem Bauraum kann so insgesamt mit der Spule ein höherer magnetischer Fluss erzeugt werden und damit eine höhere Leistung des Elektromotors erreicht werden. Ebenso kann für eine gegebene Anzahl von Windungen die Spule erheblich flacher ausgelegt werden als bisher nach dem Stand der Technik möglich, so dass bei gleicher Windungszahl ein Anker höheren Durchmessers verwendet werden kann. Damit ergibt sich gegenüber dem Stand der Technik ein höheres Drehmoment auf die Ankerwicklungen, was im Ergebnis ebenfalls zu einer Leistungssteigerung führt. Ebenso kann bei gleichbleibender Leistung eine Verkleinerung des Elektromotors und damit eine Verringerung des Fadenmaßes eines zugehörigen Elektrohandwerkzeuges erreicht werden.

Dadurch, dass das Material der Beschichtung in das Innere der Spule zwischen die Spulenwindungen dringt und damit die endgültige mechanische Stabilisierung der Spule erreicht, kann der Arbeitsgang des Aufbringens des Abrasionsschutzes mit dem der mechanischen Stabilisierung der Spule zusammengefasst werden, woraus sich fertigungstechnisch ein erheblicher Vorteil ergibt.

Die Erfindung wird nachfolgend unter Bezugnahme auf die beigefügten Figuren detaillierter beschrieben.

Die beigefügten Figuren zeigen beispielhaft eine bevorzugte Ausführungsform, bei der die einzelnen Merkmale der Erfindung miteinander kombiniert sind. Der Fachmann wird diese jedoch selbstverständlich auch losgelöst voneinander betrachten und/ oder zu anderen sinnvollen Kombinationen zusammenfassen können.

Es zeigen schematisch:
- Figur 1: eine isometrische Ansicht eines zweipoligen Stators;
- Figur 2: einen Querschnitt senkrecht zu der Längsachse des Stators der Figur 1;
- Figur 3: eine Draufsicht auf eine Statorhälfte des Stators gemäß Figuren 1 und 2;
- Figur 4: eine Detailansicht einer Verbindungsstelle eines Stators gemäß Figuren 1 und 2;
- Figur 5a: eine Detailansicht einer Statorhälfte mit einem Temperatursensorelement in einer ersten Ausführungsform;
- Figur 5b: eine Detailansicht einer Statorhälfte mit einem Temperatursensorelement in einer zweiten Ausführungsform;
- Figur 6: eine Wickelschablone, welche bei einem Wickelvorgang eines erfindungsgemäßen Stators verwendet werden kann;
- Figur 7: in einer Ansicht von der Außenseite her eine in eine Statorhälfte eingesetzte Wickelschablone nach einem Wickelvorgang;
- Figur 8: in einer isometrischen Ansicht einen mit einer Beschichtung versehenen Stator; und
- Figur 9: eine Schnittdarstellung des in Figur 8 gezeigten Stators.

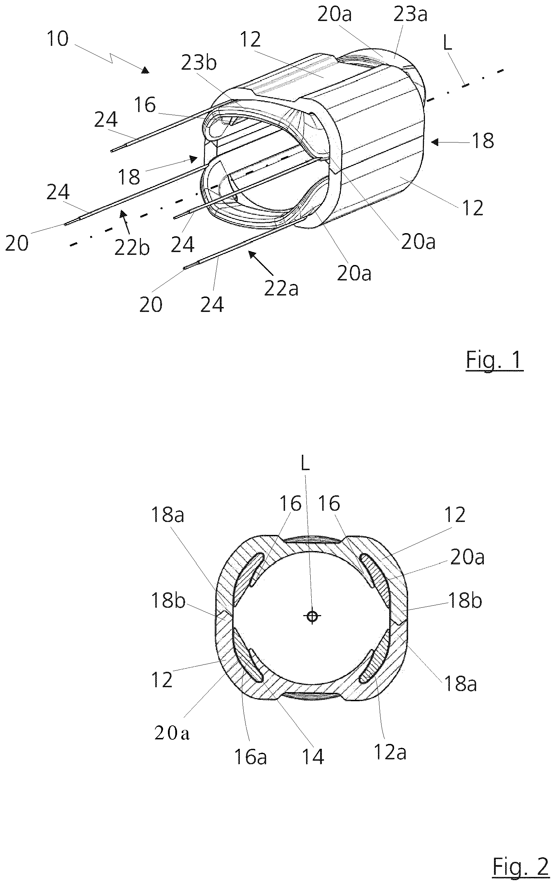

In der Figur 1 ist ein zweipoliger Stator eines elektrischen Antriebs gezeigt und allgemein mit dem Bezugszeichen 10 bezeichnet. Dieser zweipolige Stator umfasst einen Statorkörper, welcher im Bereich einer sich entlang einer Längsachse L des Stators erstreckenden Trennungsebene in zwei Statorsegmente bzw. Statorhälften 12 geteilt ist. Die beiden Statorhälften 12 sind dabei als identische Teile ausgebildet, was die Herstellung des Statorkörpers besonders einfach macht. In üblicher Weise ist der dargestellte Statorkörper des Stators 10 durch Stanzpaketieren von identischen Blechlamellen zu einem Blechpaket hergestellt.

Weiterhin umfasst jede der Statorhälften 12 zwei Polhörner bzw. Polspitzen 16 (vgl. auch Fig. 2), die sich von der Innenumfangsfläche 12a der jeweiligen Statorhälfte 12 nach innen erstrecken und somit den Innenraum des Stators 10 für einen darin aufzunehmenden Rotor (nicht dargestellt) begrenzen.

Die beiden Statorhälften 12 sind im Bereich zweier Verbindungsstellen 18 miteinander verbunden, wobei jede Statorhälfte 12 eine erste Verbindungsstelle 18a sowie eine zweite Verbindungsstelle 18b aufweist.

Weiterhin sind in Figur 1 Endabschnitte bzw. Drahtenden 22a und 22b eines spulenförmig, d.h. in der Form einer Spule 20a mit einer Wicklungsstruktur und Wickelköpfen 23a und 23b, eingelegten Spulendrahts 20 zu erkennen. Wie aus Figur 1 ersichtlich, sind die Drahtenden 22a, 22b als Anschlussdrähte jeweils mit einem Schrumpfschlauch 24 als Schlauchelement versehen, welches nicht außerhalb des Stators 10 endet, sondern in den Stator 10 eingeschoben ist, d.h. in die Wicklungsstruktur der Spule 20a hineinragt, um eine optimale Isolierung zu erreichen und einen Schutz vor leitfähigen Ablagerungen zu erhalten. Als Schlauchelemente kommen auch Glasgewebeschläuche in Betracht.

In anderen Ausführungsbeispielen könnte statt des Schlauchelements auch ein Hülsenelement vorgesehen sein.

Wie in Figur 2 deutlich zu erkennen ist, wird die erste Verbindungsstelle 18a der beiden Statorhälften 12 jeweils durch eine entlang der Längsachse L verlaufende dreieckförmige Nut 18a gebildet, während die zweite Verbindungsstelle 18b durch einen korrespondierenden entlang der Längsachse L verlaufenden dreieckförmigen Vorsprung 18b gebildet ist. Durch die spezielle Ausbildung der ersten und zweiten Verbindungsstelle 18a und 18b kann eine einfache Herstellung der Verbindungsstellen 18 ermöglicht werden.

Weiterhin wird durch die Ausprägung der ersten und zweiten Verbindungsstellen 18a und 18b eine Ausrichtung der Statorhälften 12 zueinander erreicht, wenn die jeweils korrespondierende erste Verbindungsstelle 18a mit der zweiten Verbindungsstelle 18b in Anlage gebracht wird. Schließlich kann durch diese spezielle Ausgestaltung der Verbindungsstellen 18 gewährleistet werden, dass die Statorhälften 12 bei der Herstellung des Statorkörpers in direkter Anlage zueinander aus dem Material ausgestanzt werden können, was zu einem geringeren Anfallen von Verschnitt gegenüber dem Stand der Technik führt.

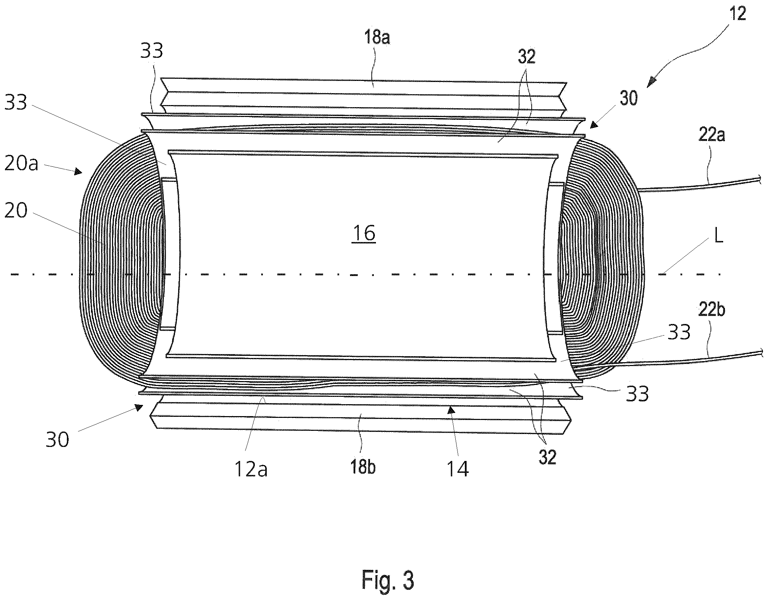

In Figur 2 ist ebenfalls deutlich gezeigt, dass die Statorinnenwand 12a und die radial äußere Wand 16a der Polhörner 16 eine Nut 14 begrenzen, in welche der aus Kupfer hergestellte Spulendraht 20 aufgenommen werden kann. Wie in den Figuren (vgl. insbesondere Figuren 2 und 3) zu erkennen ist, wird der Spulendraht 20 in der Form einer Spule 20a in den durch die Nuten 14 einer Statorhälfte 12 ausgebildeten Spulenraum eingelegt.

In Figur 2 ist weiterhin gezeigt, dass der eingelegte Spulendraht 20 nicht wie in der Praxis üblich mit einem Füllgrad von weniger als 100 % in die Nut 14 eingelegt ist, sondern über die Nut 14 hinaus gewickelt ist. Darin ist eine Besonderheit der vorliegenden Erfindung zu sehen, da durch einen Füllgrad von mehr als 100 % eine erhöhte Leistung eines Elektromotors mit einem derart gewickelten Stator 10 gegenüber einem Elektromotor mit einem konventionell gewickelten Stator erreicht werden kann. Insbesondere ermöglicht es die in Figur 2 gezeigte Wicklungsform, insgesamt mehr Spulenwindungen in einem hohlzylindrischen Volumenelement (welches sich zwischen den Statorhälften und der Außenseite eines Ankers befindet) anzuordnen als nach dem Stand der Technik möglich. Bei gleichem beanspruchtem Bauraum kann so insgesamt mit der Spule 20a ein höherer magnetischer Fluss erzeugt werden und damit eine höhere Leistung des Elektromotors erreicht werden. Ebenso kann für eine gegebene Anzahl von Windungen die Spule 20a erheblich flacher ausgelegt werden als bisher nach dem Stand der Technik möglich, so dass bei gleicher Windungszahl ein Anker höheren Durchmessers verwendet werden kann. Damit ergibt sich gegenüber dem Stand der Technik ein höheres Drehmoment auf die Ankerwicklungen, was im Ergebnis ebenfalls zu einer Leistungssteigerung führt. Ebenso kann bei gleichbleibender Leistung eine Verkleinerung des Elektromotors und damit eine Verringerung des Fadenmaßes eines zugehörigen Elektrohandwerkzeuges erreicht werden.

Da in dem über die Nut 14 hinausgehenden Bereich die mechanisch stabilisierende Wirkung der Polhörner 16 wegfällt, sind zusätzliche Maßnahmen erforderlich, um zu gewährleisten, dass die Spule ihre Form beibehält und sich die Wicklungen nicht voneinander lösen.

Hierzu ist eine zumindest teilweise stoffschlüssige Verbindung der Windungen der Spule 20a untereinander mindestens in Teilen des außerhalb der Nut 14 befindlichen Bereiches der Spule 20a vorteilhaft. Diese stoffschlüssige Verbindung kann beispielsweise unter Verwendung eines Backlackdrahtes verwirklicht werden. Unter einem Backlackdraht wird ein Spulendraht verstanden, der eine temperaturfeste Grundisolation und eine durch Erhitzen verklebende, oft auch dabei polymerisierende Deckschicht aufweist. Zusätzlich oder alternativ kann die stoffschlüssige Verbindung auch mittels eines Träufelharzes geschaffen werden, welches aufgrund der Kapillarwirkung der Zwischenräume zwischen den Windungen in der Spule 20a die Spule 20a nach einem Eintauchen praktisch vollständig durchdringt.

Wie in Figur 3 gezeigt ist, umfasst der zweipolige Stator 10 mit seinen beiden Statorhälften 12 nicht nur einen durch die Statorhälften 12 gebildeten Statorkörper, der mit Spulendraht 20 bewickelt ist, sondern auch Isolierpapier 30, das in die Nuten 14 eingelegt wird, ehe der Spulendraht 20 auf die jeweilige Statorhälfte 12 aufgewickelt wird.

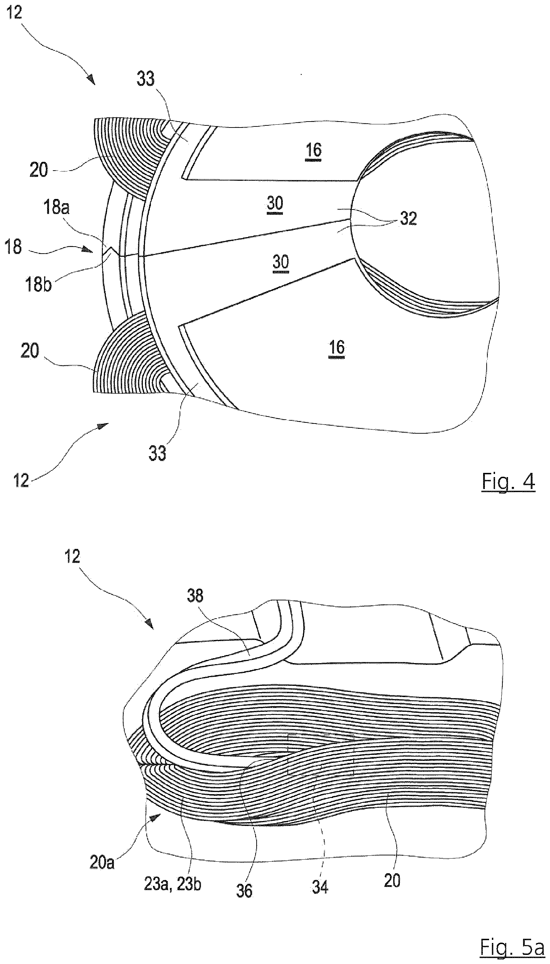

Das Isolierpapier 30 dient dazu, die durch den Spulendraht 20 gebildete Spule 20a im Betrieb eines den Stator 10 aufweisenden Elektromotors vor Abrasion zu schützen und elektrisch gegenüber dem Statorkörper sowie dem benachbarten Rotor (nicht gezeigt) zu isolieren. So ist gemäß der Norm DIN EN 60745 ein Mindestabstand von 2 mm Luftstrecke zwischen einem aktiven Teil, wie dem Statorkörper oder dem Rotor, und dem Spulendraht sicher zu stellen um eine elektrische Isolation zu gewährleisten. Diese wird bei dem vorstehend angesprochenen Füllgrad des Spulendrahts 20 über 100 % dadurch sichergestellt, dass das Isolierpapier 30 mit einem radialen Überstand 32 (vgl. auch Figur 4) über die jeweiligen Polhörner 16 hinaus vorgesehen ist.

Als radialer Überstand 32 wird der Teil des Isolierpapiers 30 verstanden, der bezogen auf die Längsachse L radial, d.h. in einer Richtung senkrecht zu der Längsachse L, über die Polhörner 16 übersteht.

Dabei kann der Überstand 32 des Isolierpapiers 30, wie in Figur 4 gezeigt, derart gewählt sein, dass zumindest die radial innenliegenden Abschnitte des überstehenden Isolierpapiers 32 dann, wenn die Statorhälften 12 zusammengesetzt sind, d. h. im Bereich ihrer Verbindungsstellen 18 aneinander anliegen, die Überstände 32 des Isolierpapiers 30 der beiden Statorhälften 12 ebenfalls aneinander anliegen bzw. sich überlappen. Zudem kann, wie in Figur 3 zu erkennen ist, auch ein (bezogen auf die Längsachse L des Stators 10) axialer Überstand 33 des Isolierpapiers 30 sinnvoll sein, um den elektrischen Sicherheitsabstand von 2 mm Luftstrecke zwischen Spulendraht und aktivem Eisen zu gewährleisten. Als axialer Überstand 33 wird der Teil des Isolierpapiers 30 verstanden, der bezogen auf die Längsachse L axial, d.h. in einer Richtung parallel zu der Längsachse L, über die Polhörner 16 übersteht.

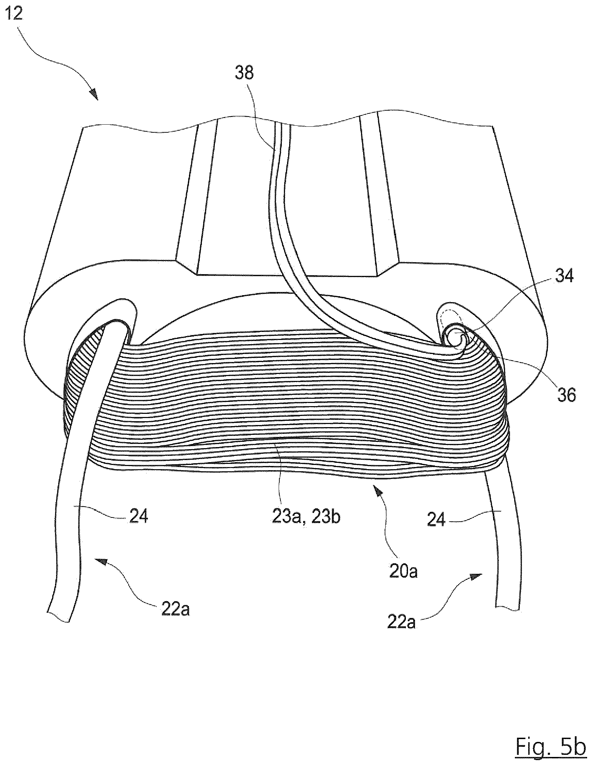

Wie aus Figur 5a ersichtlich, ist ein gestrichelt angedeutetes Temperatursensorelement 34 in einer Aussparung bzw. einem Hohlraum 36 in der Wicklungsstruktur der Spule 20a vorhanden, um die Temperatur der Spule 20a bzw. des Spulendrahts 20 während des Betriebs zu erfassen. Das Temperatursensorelement 34 ist wenigstens annähernd vollständig von der Spule 20a umgeben, so dass in Figur 5a lediglich die Anschlussleitungen 38 aus der Spule herausragen. Das Temperatursensorelement 34 kann nur in eine oder auch in beide Statorhälften 12 eingebracht werden. Wie aus Figur 5b ersichtlich, kann das Temperatursensorelement 34 alternativ auch in einem Hohlraum 36 in wenigstens einer der Spulennuten 14 untergebracht sein. Dazu kann das Temperatursensorelement 34 zwischen der Spule 20a einerseits und der Statorwand und/oder einem der Polhörner 16 andererseits angeordnet sein.

Eine weitere Besonderheit der vorliegenden Erfindung ist darin zu sehen, dass die beiden Drahtenden bzw. Drahtendabschnitte 22a, 22b, welche beim Wickelvorgang von der Spule 20a an den Statorhälften 12 entstehen, wie vorstehend erwähnt als Anschlussdrähte bzw. elektrische Anschlüsse des Elektromotors genutzt werden können. Hierfür werden die Drahtenden 22a, 22b in ausreichend großer Länge aus der Spule 20a herausgeführt, um die Funktion von aus dem Stand der Technik bekannten separaten Litzen zu übernehmen und einen Anschluss der Spule 20a an eine Stromquelle oder einen Stromverteiler (nicht gezeigt) zu ermöglichen. An den freien Enden der Drahtendabschnitte 22a, 22b können separate Anschlusselemente, beispielsweise in der Form einer Crimpkralle (nicht dargestellt) in der Weise befestigt werden, dass diese die isolierende Außenschicht (im dargestellten Beispiel eine isolierende Grundschicht sowie eine darauf aufgebrachte Backlackschicht) des Spulendrahts 20 durchdringen und eine elektrische Kontaktierung der Spule ermöglichen. Die Anschlusselemente (nicht dargestellt) können zudem in ihrer Außengeometrie in der Art eines Steckers ausgebildet sein, der in einen korrespondierenden Steckverbinder an der Stromquelle bzw. dem Stromverteiler des elektrischen Antriebs eingesteckt werden kann.

Nachfolgend wird der Herstellungsprozess eines zweipoligen Stators unter Bezugnahme auf die Figuren beschrieben:
Aus einem durch Stanzpaketieren von identischen Blechlamellen hergestellten Blechpaket werden die beiden Statorhälften 12 in Anlage zueinander ausgestanzt, die in einem weiteren Prozessschritt mit Kupferdraht bewickelt werden sollen.

Um im Betrieb eine ausreichende elektrische Isolation gewährleisten und ausreichend große Abstände zwischen der Spule und aktiven Teilen des Elektromotors bereitstellen zu können, wird, bevor die Statorhälften 12 bewickelt werden, Isolierpapier 30 in die Nuten 14 der jeweiligen Statorhälften 12 eingelegt.

Um zu gewährleisten, dass das Isolierpapier 30 relativ zu der jeweiligen Statorhälfte 12, in deren Nut 14 das Isolierpapier 30 eingelegt wird, fixiert ist, können die Statorhälften 12 in einem vorgeschalteten Prozessschritt vor dem Einlegen des Isolierpapiers 30 in die zugehörigen Nuten 14 zumindest in dem Bereich der Nuten erwärmt werden, beispielsweise auf eine Temperatur von wenigstens 150° Celsius. Das Isolierpapier 30 ist auf derjenigen Seite, mit der es in Anlage an die erwärmte Nut 14 der Statorhälften 12 kommen soll, zumindest abschnittsweise mit einem Backlack beschichtet. Das eingelegte Isolierpapier 30 kann dann, sobald es in die zugehörige Nut 14 eingelegt ist, für einige Sekunden an die Nutinnenseiten angepresst werden. Dabei schmilzt die Backlackbeschichtung an dem Isolierpapier 30 an und verklebt dieses mit der Statorhälfte 12. Eine Fixierung des Isolierpapiers 30 bei dem nachfolgenden Prozessschritt des Bewickelns ist folglich nicht mehr notwendig.

Das eingelegte Isolierpapier 30 weist dabei, wie bereits vorstehend beschrieben, einen radialen Überstand 32 über die Polspitzen 16 der jeweiligen Statorhälften 12 hinaus auf.
Dieser Überstand 32 kann während des nachfolgenden Wickelvorgangs zusätzlich nach radial innen gezogen werden, um während des Bewickelns sicherzustellen, dass das Isolierpapier 30 nicht durch den Spulendraht 20 geknickt wird.

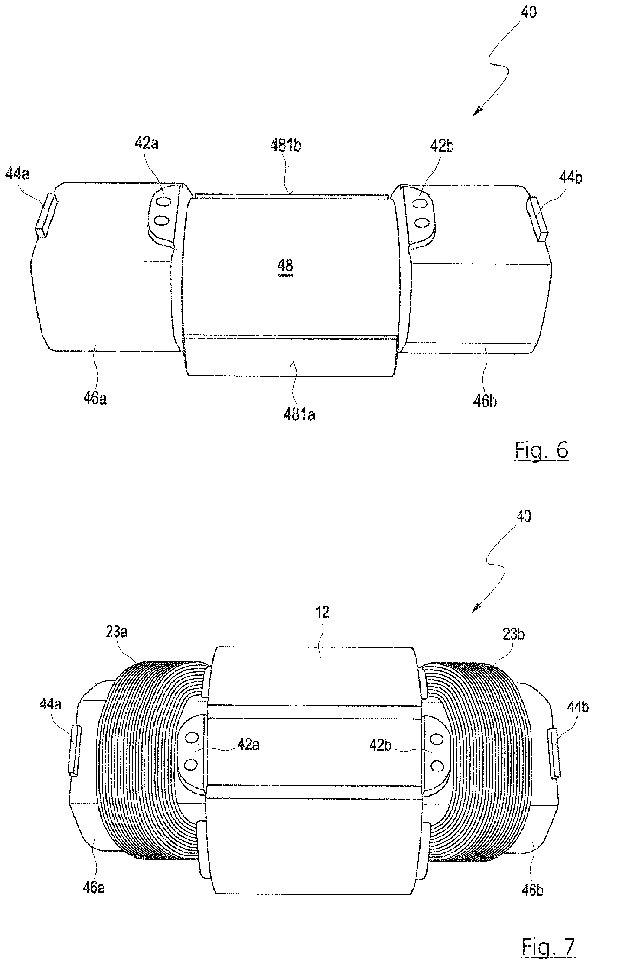

In einem weiteren Schritt wird jede der Statorhälften 12 automatisiert mit Hilfe eines Wickelarms mit dem Spulendraht 20 bewickelt. Um eine Bewicklung der Statorhälften 12 zu erreichen, bei der der Füllgrad der Spulennut 14 über 100 % liegt, kann eine wie in Fig. 6 dargestellte Wickelschablone 40 verwendet werden. Die Wickelschablone 40 zeigt dabei ein näherungsweise halbzylindrisches Mittelstück 48, an dessen Stirnseiten jeweils die beiden von diesem am Umfang etwas abgesetzten Schablonenenden 46a und 46b angeordnet sind. Dabei ist das Mittelstück 48 dazu vorgesehen, von der Innenseite her auf eine Statorhälfte 12 aufgesetzt zu werden, wobei es mittels der Schablonenenden 46a und 46b auf dieser in Axialrichtung zentriert wird. Das Mittelstück 48 zeigt dabei die Anlagenflächen 481a und 481b, welche bei eingesetzter Wickelschablone 40 über die Polhörner der Statorhälfte überstehen und so eine zusätzliche temporäre Nut schaffen, in welcher der Spulendraht 20 gewickelt werden kann, wobei er dort während und nach dem Wickelvorgang mittels der Wickelschablone 40 in dieser temporären Nut geführt und gehalten wird.

Ferner zeigt die in Fig. 6 dargestellte Wickelschablone 40 auf ihren Schablonenenden 46a und 46b jeweils einen äußeren Fortsatz 44a, 44b und einen inneren Fortsatz 42a, 42b. Zwischen den Fortsätzen 42a und 44a bzw. 42b und 44b kann beim Wickelvorgang der Spulendraht 20 ebenfalls geführt bzw. angeordnet werden, so dass sich über die Statorhälfte 12 hinausstehend ein Wickelkopf mit einer definierten Form ergibt. Im Unterschied zum Stand der Technik kann also durch die Verwendung der Wickelschablone 40 einerseits erreicht werden, dass auch Bereiche außerhalb der Nut 14 mit Spulendraht 20 gefüllt werden und andererseits auch, dass eine definierte Form eines Wickelkopfes geschaffen werden kann.

Fig. 7 zeigt in einer Ansicht von der Außenseite her die in der Statorhälfte 12 eingesetzte Wickelschablone 40 nach dem Wickelvorgang. Gut erkennbar ist die definierte Ausbildung der Wickelköpfe 23a, b, welche durch die Fortsätze 42a, 44a und 42b, 44b erreicht werden kann. Ansonsten entsprechen die in der Fig. 7 verwendeten Bezugszeichen den bereits in der Fig. 6 verwendeten.

Bevor diese Schablone wieder entnommen wird, um den Statorkörper weiteren Fertigungsschritten zuzuführen, wird die Spule 20a mindestens teilweise verbacken bzw. "angebacken". Aus diesem Grund wird bei dem vorliegenden Herstellungsprozess ein Backlackdraht als Spulendraht 20 verwendet, d.h. ein Kupferdraht mit einer temperaturfesten Grundisolation und einer zusätzlichen Backlack-Deckschicht, welche bei Temperaturen von etwa 150°C bis 200°C erweicht und aushärtet, so dass die einzelnen Spulenwindungen der Spule 20a von dem ausgehärteten Backlack zumindest für die nachfolgenden Handhabungsschritte während der Fertigung in einem Verbund miteinander gehalten werden. Um den Backlack entsprechend zu erwärmen, wird Strom in die Spule 20a eingeleitet, so dass diese sich infolge ihres elektrischen Widerstands auf die gewünschte Temperatur (etwa 150°C bis 200°C) erhitzt. Für eine vorläufige Stabilisierung der Spule 20a genügt ein Stromfluss von ca. 50A für einen Zeitraum für ca. 4s, wodurch die Taktzeiten der Fertigung gering gehalten werden können. In diesem Verfahrensschritt, in dem die einzelnen Drahtwindungen zu einer Spule 20a verbacken werden, kann auch der Überstand 32 des Isolierpapiers 30 an die Spule 20a angebacken werden. Dabei kann das Isolierpapier 30 hierfür ebenfalls eine Backlackbeschichtung zumindest im Bereich seines Überstands 32 auf der der Spule 20a zugewandten Seite aufweisen.

Alternativ ist es jedoch ebenfalls denkbar, das Isolierpapier direkt an der Backlackbeschichtung des Spulendrahtes oder mit Hilfe eines separat aufzubringenden Beschichtungsmittels an der Spule zu verbacken. Weiterhin ist auch denkbar, ein anderes Beschichtungsmittel bzw. eine andere Deckschicht als Backlack zur Fixierung der Spulenwindungen aneinander einzusetzen.

Ein nicht dargestelltes Platzhalterelement, insbesondere ein Stift oder dergleichen kann in den Bereich des Spulenraums in der Weise eingelegt werden, dass sich beim automatisierten Einlegen des Spulendrahts 20 in den Spulenraum der durch das Platzhalterelement begrenzte Hohlraum 36 in der Wicklungsstruktur der Spule 20a oder in wenigstens einer der Spulennuten 14 ergibt. Nach dem Entfernen des Platzhalterelements aus der Wicklungsstruktur der Spule 20a oder aus der wenigstens einen Spulennut 14 kann in den verbleibenden Hohlraum 36 das Temperatursensorelement 34 eingeführt werden.

Die Wickelschablone 40 ist beispielsweise derart ausgebildet, dass in einem Bereich der gewickelten Spule 20a die entsprechende Ausnehmung bzw. der Hohlraum 36 verbleibt, in den in einem weiteren Prozessschritt das Temperatursensorelement 34 in die gewickelte Spule 20a eingeführt werden kann. Alternativ kann das von der Wickelschablone separate Platzhalterelement verwendet werden. Das Temperatursensorelement 34 wird in dem wenigstens einen Hohlraum 36 der Spule 20a fixiert. Dies kann mittels des Fixiermittels für den Spulendraht 20 erfolgen. Alternativ ist es jedoch ebenfalls denkbar, das Temperatursensorelement 34 direkt an der Backlackbeschichtung des Spulendrahts 20 zu verbacken oder mit Hilfe eines zusätzlichen separat aufzubringenden Sensorfixiermittels an der Spule 20a zu fixieren. Dazu kann das Temperatursensorelement 34 wenigstens teilweise mit dem Sensorfixiermittel beschichtet werden. Das Platzhalterelement und damit auch der Hohlraum 36 kann im Bereich des Wickelkopfes 23a, b oder in einer der Spulennuten 14 zwischen der Spule 20a einerseits und der Statorwand und/oder einem der Polhörner 16 andererseits vorgesehen werden. Das zusätzliche Sensorfixiermittel kann z. B. Klebstoff, Träufelharz oder Backlack umfassen.

Darüber hinaus kann ein vorstehend genanntes Platzhalterelement in den Bereich des Spulenraums in der Weise eingelegt werden, dass sich beim automatisierten Einlegen des Spulendrahts 20 in den Spulenraum ein nicht dargestellter, durch das Platzhalterelement begrenzter, Hohlraum im Bereich der Endabschnitte 22a, 22b in der Wicklungsstruktur der Spule 20a ergibt. Nach dem Entfernen des Platzhalterelements aus der Wicklungsstruktur der Spule 20a kann der Schrumpfschlauch 24 auf das jeweilige Drahtende 22a, 22b aufgebracht und in den verbleibenden Hohlraum in der Wicklungsstruktur der Spule 20a eingeführt werden. Anschließend wird der Schrumpfschlauch 24 mittels eines Schlauchfixiermittels in der Wicklungsstruktur der Spule 20a fixiert. Das Schlauchfixiermittel kann Klebstoff oder Träufelharz, vorzugsweise ein dual härtendes Harz umfassen.

Schließlich können die Anschlusselemente an den freien Enden der Drahtendabschnitte 22a, 22b befestigt werden, wobei diese bevorzugt nicht nur an den Drahtendabschnitten 22a, 22b angreifen, sondern im befestigten Zustand auch den Schrumpfschlauch 24 durchdringen, um auf diese Weise eine optimale Isolation und Schutzwirkung zum Schutz der Drahtendabschnitte 22a, 22b bereitstellen zu können.

Nachdem die beiden Statorhälften 12 auf diese Weise hergestellt und bewickelt sind, werden diese miteinander verbunden, um gemeinsam den Statorkörper zu bilden. Hierzu werden die beiden Statorhälften 12 im Bereich ihrer Verbindungsstellen 18 aneinander angelegt, wobei jeweils eine erste Verbindungsstelle 18a einer Statorhälfte 12 in Anlage mit einer zweiten Verbindungsstelle 18b der jeweils anderen Statorhälfte 12 gebracht wird.

Die beiden aneinander anliegenden Statorhälften 12 können in einem weiteren Schritt mittels Tauchimprägnierung aneinander fixiert werden. Hierzu können die beiden aneinander anliegenden Statorhälften 12 bzw. die aufgewickelte Spule 20a erwärmt und in ein Tauchbad, insbesondere mit dual härtendem Harz (Träufelharz bzw. Dualharz) eingetaucht werden, welches sowohl unter Wärmeeinwirkung als auch unter UV-Licht aushärtet. Aufgrund der Kapillarwirkung der Zwischenräume zwischen den einzelnen Windungen der Spule 20a wird diese weitgehend von dem Träufelharz durchsetzt. Dadurch, dass die Spule 20a erwärmt wird, kann das Harz an der Spule 20a und insbesondere auch im Inneren der Spule 20a zwischen den Windungen bereits während des Tauchvorgangs aushärten, wodurch die gesamten Spule 20a mechanisch soweit stabilisiert werden kann, dass sie der mechanischen Beanspruchung im späteren Einsatz standhält. In den Außenbereichen des Stators 10, die nicht die gleiche Temperatur wie die Spule 20a haben, kann im Fall der Verwendung eines Dualharzes das Harz in einem weiteren Schritt mittels UV-Licht ausgehärtet werden.

Die Tauchimprägnierung dient nicht nur als zusätzlicher Schutz des gesamten Statorkörpers vor Abrasion, sondern auch als Statorfixiermittel zur stoffschlüssigen Verbindung der Statorhälften 12 miteinander. Grundsätzlich ist es jedoch auch denkbar, vor dem Schritt der Tauchimprägnierung die beiden Statorhälften beispielsweise durch Kleben, Schweißen oder Löten oder dergleichen stoffschlüssig miteinander zu verbinden. Dabei ist sowohl denkbar, nur einzelne Fixierungspunkte anzubringen, als auch eine Verbindungsnaht entlang der Verbindungsstellen 18 vorzusehen, um die Statorhälften während der Tauchimprägnierung in ihrer relativen Lage zueinander zu halten.

Das Statorfixiermittel, d.h. in dem beschriebenen Fall das Dualharz kann auch als Schlauchfixiermittel dienen bzw. als Sensorfixiermittel.

Die vorstehend beschriebene Tauchimprägnierung ist äußerst vorteilhaft, da diese eine Beschichtung von Spule und Statorkörper sowie das Fixieren der Statorhälften aneinander in einem einzigen Prozessschritt ermöglicht. Weiterhin wird durch die verwendete Tauchimprägnierung sichergestellt, dass der Stator ein in sich sowohl elektrisch optimal isoliertes als auch gegen Abrasion geschütztes Gesamtsystem bildet. Das vorstehend beschriebene teilweise Verbacken bzw. Anbacken der Spulenwindungen kann durch die Kombination mit dem weiteren Prozessschritt des Tauchimprägnierens innerhalb eines Zeitfensters von etwa 3 Sekunden vorgenommen werden, da hierdurch die Windungen der Spule nur relativ zu einander in dem Maße gesichert werden müssen, dass die Wickelschablone entnommen werden kann. Die in einem weiteren Prozessschritt vorgenommene Tauchimprägnierung sichert die ausreichende Stabilität der Spule im Betrieb des elektrischen Antriebs. Wollte man die Spule nur durch Verbacken der Backlackbeschichtung des Spulendrahtes fixieren, wären höhere Backzeiten in der Wickelmaschine notwendig, was insgesamt die Taktzeit bei der Herstellung unvorteilhaft erhöhen würde.

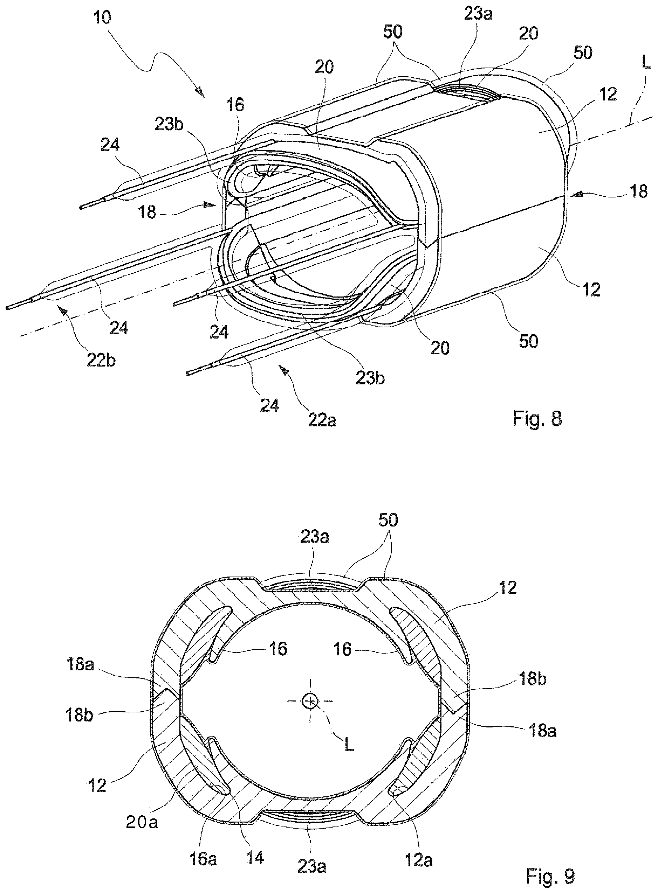

In den Figuren 8 und 9 ist ein Stator 10 gezeigt, welcher wie vorstehend beschrieben mittels einer Tauchimprägnierung beschichtet wurde. Grundsätzlich sind auch andere Beschichtungsverfahren zur Erzeugung des beschichteten Stators 10 wie bspw. Besprühen denkbar. Die in den Figuren 8 und 9 verwendeten Bezugszeichen entsprechen weitgehend den bereits in den Figuren 1 und 2 verwendeten.

Fig. 8 zeigt in einer isometrischen Ansicht einen Stator 10, bei welchem die Wickelköpfe 23a und 23b mit der gemeinsamen Beschichtung 50 versehen sind. Gut erkennbar in Fig. 8 ist, dass die gemeinsame Beschichtung 50 im vorliegend gezeigten Ausführungsbeispiel den Statorkörper an seiner Innen- und Außenseite sowie die Wickelköpfe 23a und 23b wie auch die mit dem Schrumpfschlauch 24 versehenen Drahtenden 22a, 22b bedeckt. Es wird also im vorliegenden Ausführungsbeispiel über den gesamten Stator 10 hinweg eine durchgängige Beschichtung 50 ausgebildet, welche sämtliche Komponenten wirksam schützt und aufgrund ihrer Ausbildung als gemeinsame Beschichtung keine harten Absätze oder Übergänge ausbildet, an welchen abrasiv wirkende Partikel in der vorbeiströmenden Luft angreifen könnten.

Fig. 9 zeigt in einem zur Achse L senkrechten Schnitt den Verlauf der Beschichtung 50. Gut erkennbar aus Fig. 9 ist, dass die Beschichtung 50 im Bereich des Statorkörpers etwas dünner ausgebildet ist als im Bereich der Wickelköpfe 23a. Die dickere Beschichtung im Bereich der Wickelköpfe 23a ist insbesondere auch deswegen vorteilhaft, weil diese in der Regel am stärksten einem abrasiv wirkenden Partikelstrom in der Kühlluft ausgesetzt sind.

Der in den Figuren 8 und 9 gezeigte Stator 10 kann nachfolgend in ein Motorgehäuse (nicht gezeigt) eingesetzt werden.

## Patentansprüche

1. Stator eines elektrischen Antriebs, wobei der Stator (10) umfasst:
- einen Statorkörper mit einer Außenseite und einer Innenseite mit einem Spulenraum zur Aufnahme eines Spulendrahts (20) in Form einer Spule (20a), wobei der Spulenraum mehrere Nuten (14) umfasst, die von der Statorwand (12a) und Polhörnern (16) des Stators (10) begrenzt werden,
- den in den Spulenraum eingelegten Spulendraht (20),
- Wickelköpfe (23a,23b), welche aus dem Spulendraht (20) gebildet sind,
wobei die Außenseite des Statorkörpers und mindestens ein Wickelkopf (23a,23b) mindestens teilweise mit einer gemeinsamen Beschichtung (50) versehen sind
**dadurch gekennzeichnet, dass** der Spulendraht (20) im Bereich mindestens eines Drahtendes (22a,22b) von einer Ummantelung (24) umgeben ist, die sich bis in den Bereich der Nut (14) erstreckt.

2. Stator nach Anspruch 1, **dadurch gekennzeichnet, dass** die Beschichtung (50) als durchgängige, geschlossene Schicht ausgebildet ist, welche sowohl die Wickelköpfe (23a,23b) als auch den Stator (10) vollständig einhüllt.

3. Stator nach einem der vorangehenden Ansprüche, **dadurch gekennzeichnet, dass** die Beschichtung (50) im Bereich der Statoraußenseite eine Dicke im Bereich von 0,001 bis 0,4mm, insbesondere von 0,05-0,15 mm aufweist.

4. Stator nach einem der vorangehenden Ansprüche, **dadurch gekennzeichnet, dass** die Beschichtung (50) im Bereich der Wickelköpfe (23a,23b) eine Dicke im Bereich von 0,01 bis zu 3mm, insbesondere im Bereich von 0,15-0,25 mm aufweist.

5. Stator nach einem der vorangehenden Ansprüche, **dadurch gekennzeichnet, dass** die Beschichtung (50) ein Träufelharz enthält.

6. Stator nach einem der vorhergehenden Ansprüche, **dadurch gekennzeichnet, dass** die Ummantelung (24) als Schrumpfschlauch (24) oder Gewebeschlauch ausgebildet ist.

7. Stator nach einem der vorhergehenden Ansprüche, **dadurch gekennzeichnet, dass** der Bereich zwischen der Ummantelung (24) und dem Spulendraht (20) mindestens teilweise mit dem Material der Beschichtung (50) ausgefüllt ist.

8. Stator nach einem der vorangehenden Ansprüche, **dadurch gekennzeichnet, dass** der Spulendraht (20) über die Nut (14) hinaus in einem Bereich zwischen den Polhörnern (16) gewickelt ist.

9. Stator nach einem der vorangehenden Ansprüche, **dadurch gekennzeichnet, dass** sich das Material der Beschichtung (50) im Inneren der Spule (20a) zwischen den Spulenwindungen befindet.

10. Verfahren zum Herstellen eines Stators mit den Merkmalen eines der Ansprüche 1 bis 9, mit den folgenden Schritten:
- Einbringen des Spulendrahts (20) in den Spulenraum,
- Bereitstellen einer Ummantelung (24) des Spulendrahts (20) im Bereich wenigstens eines Drahtendes (22a, 22b), wobei diese bis in den Bereich der Nut (14) geführt wird,
- Gemeinsames Beschichten des mit dem Spulendraht (20) versehenen Statorkörpers und mindestens eines Wickelkopfes (23a, 23b).

11. Verfahren nach Anspruch 10, **dadurch gekennzeichnet, dass** das Beschichten durch Eintauchen des Statorkörpers in das Beschichtungsmaterial erreicht wird.

12. Verfahren nach einem der Ansprüche 10 oder 11, **dadurch gekennzeichnet, dass** es sich bei dem Beschichtungsmaterial um ein Träufelharz handelt.

13. Verfahren nach einem der vorangehenden Ansprüche 10 bis 12, **dadurch gekennzeichnet, dass** das Material der Beschichtung (50) in das Innere der Spule (20a) zwischen die Spulenwindungen dringt.

## Claims

1. Stator of an electric drive, the stator (10) comprising:
- a stator body with an outer side and an inner side with a coil space to hold a coil wire (20) in the form of a coil (20a), the coil space comprising multiple grooves (14), which are delimited by the stator wall (12a) and pole horns (16) of the stator (10),
- the coil wire (20) inserted into the coil space,
- winding heads (23a, 23b), which are formed from the coil wire (20), the outer side of the stator body and at least one winding head (23a, 23b) being at least partly provided with a common coating (50), **characterized in that** the coil wire (20) in the region of at least one wire end (22a, 22b) is surrounded by a sheath (24), which extends into the region of the groove (14).

2. Stator according to Claim 1 **characterized in that** the coating (50) is formed as a continuous closed layer, which completely envelops both the winding heads (23a, 23b) and the stator (10).

3. Stator according to one of the preceding claims, **characterized in that** the coating (50) in the region of the stator outer side has a thickness in the range from 0.001 to 0.4 mm, in particular from 0.05 - 0.15 mm.

4. Stator according to one of the preceding claims, **characterized in that** the coating (50) in the region of the winding heads (23a, 23b) has a thickness in the range from 0.01 up to 3 mm, in particular in the range from 0.15 to 0.25 mm.

5. Stator according to one of the preceding claims, **characterized in that** the coating (50) contains an impregnation resin.

6. Stator according to one of the preceding claims, **characterized in that** the sheath (24) is formed as a shrink tube (24) or fabric tube.

7. Stator according to one of the preceding claims, **characterized in that** the region between the sheath (24) and the coil wire (20) is at least partly filled with the material of the coating (50).

8. Stator according to one of the preceding claims, **characterized in that** the coil wire (20) is wound beyond the groove (14) in a region between the pole horns (16).

9. Stator according to one of the preceding claims, **characterized in that** the material of the coating (50) is located in the interior of the coil (20a), between the coil windings.

10. Method for manufacturing a stator having the features of one of Claims 1 to 9, comprising the following steps:
- introducing the coil wire (20) into the coil space,
- providing a sheath (24) of the coil wire (20) in the region of at least one wire end (22a, 22b), wherein the said sheath is led into the region of the groove (14),
- jointly coating the stator body provided with the coil wire (20) and at least one winding head (23a, 23b).

11. Method according to Claim 10, **characterized in that** the coating is achieved by immersing the stator body in the coating material.

12. Method according to either of Claims 10 and 11, **characterized in that** the coating material is an impregnation resin.

13. Method according to one of the preceding Claims 10 to 12, **characterized in that** the material of the coating (50) penetrates into the interior of the coil (20a), between the coil windings.

## Revendications

1. Stator d'un entraînement électrique, le stator (10) comprenant :
- un corps de stator avec un côté extérieur et un côté intérieur pourvu d'une chambre de bobine recevant un fil à bobiner (20) sous la forme d'une bobine (20a), dans lequel la chambre de bobine comprend plusieurs rainures (14), délimitées par la paroi du stator (12a) et des cornes polaires (16) du stator (10),
- le fil à bobiner (20) introduit dans la chambre de bobine,
- des têtes de bobine (23a, 23b) qui sont formées à partir du fil à bobiner (20), dans lequel le côté extérieur du corps de stator et au moins une tête de bobine (23a, 23b) étant munis au moins en partie d'un revêtement (50) commun **caractérisé en ce que**, le fil à bobiner (20) est entouré dans la zone d'au moins une extrémité de fil (22a, 22b) d'une gaine (24), qui s'étend jusque dans la zone de la rainure (14).

2. Stator selon la revendication 1, **caractérisé en ce que** le revêtement (50) est réalisé sous la forme d'une couche continue, fermée qui entoure entièrement aussi bien les têtes de bobine (23a, 23b) que le stator (10).

3. Stator selon l'une des revendications précédentes, **caractérisé en ce que** le revêtement (50) dans la zone du côté extérieur du stator a une épaisseur dans la plage allant de 0,001 à 0,4mm, en particulier de 0,05 à 0,15mm.

4. Stator selon l'une des revendications précédentes, **caractérisé en ce que** le revêtement (50) dans la zone des têtes de bobine (23a, 23b) a une épaisseur dans la plage allant de 0,01 à 3mm, en particulier de 0,15 à 0,25mm.

5. Stator selon l'une des revendications précédentes, **caractérisé en ce que** le revêtement (50) contient une résine d'imprégnation.

6. Stator selon l'une des revendications précédentes, **caractérisé en ce que** la gaine (24) est réalisée sous la forme d'un tube souple thermorétractable (24) ou d'un tube flexible en tissu.

7. Stator selon l'une des revendications précédentes, **caractérisé en ce que** la zone entre la gaine (24) et le fil à bobiner (20) est remplie au moins en partie avec le matériau du revêtement (50).

8. Stator selon l'une des revendications précédentes, **caractérisé en ce que** le fil à bobiner (20) est bobiné jusqu'à l'extérieur de la rainure (14), dans une zone entre les cornes polaires (16).

9. Stator selon l'une des revendications précédentes, **caractérisé en ce que** le matériau du revêtement (50) se trouve à l'intérieur de la bobine (20a) entre les spires de la bobine.

10. Procédé de fabrication d'un stator présentant les caractéristiques de l'une des revendications 1 à 9, comportant les étapes suivantes:
- l'introduction du fil à bobiner (20) dans la chambre de bobine,
- la mise en place d'une gaine (24) pour le fil à bobiner (20) dans la zone d'au moins une extrémité du fil (22a, 22b), dans lequel celle-ci est amenée jusque dans la zone de la rainure (14),
- le revêtement commun du corps de stator pourvu du fil de bobine (20) et d'au moins une tête de bobine (23a, 23b).

11. Procédé selon la revendication 10, **caractérisé en ce que** le revêtement est obtenu en plongeant le corps du stator dans le matériau de revêtement.

12. Procédé selon l'une des revendications 10 ou 11, **caractérisé en ce que** le matériau de revêtement est une résine d'imprégnation.

13. Procédé selon l'une des revendications précédentes 10 à 12, **caractérisé en ce que** le matériau du revêtement (50) pénètre dans l'intérieur de la bobine (20a) entre les spires de la bobine.
